# DEMANDE DE BREVET EUROPEEN

(11) **EP 2 722 559 A2**
(43) Date de publication de la demande: **23.04.2014**
(21) Numéro de dépôt: 13188335.7
(22) Date de dépôt: 11.10.2013
(51) Int. Cl.: F16H 55/12, F03D 1/06, F03D 11/00, F03D 7/02, F16H 55/17

(54) **Palier à roulement et éolienne le comprenant**

(30) Priorité: 22.10.2012 FR 1260016
(71) Demandeur: Aktiebolaget SKF, 415 50 Göteborg (SE)
(72) Inventeur: Magny, Jean-Baptiste, 89580 Mige (FR); Bouron, Cyril, 89800 PUITS DE COURSON (FR); Noirot, Jean-Baptiste, 89200 Avallon (FR); Ovize, Pascal, 89530 Chitry Le Fort (FR)
(74) Mandataire: Casalonga, Axel

(57) **Abrégé**

Palier à roulement (1) comprenant une bague intérieure (3), une bague extérieure (2), au moins une rangée d'éléments de roulement disposés entre des chemins de roulements pratiqués sur lesdites bagues (2, 3) et une couronne d'engrenage (6) fixée sur l'une desdites bagues (2). La couronne d'engrenage (6) est formée par au moins deux segments d'engrenage indépendants (7, 8, 9, 10, 11, 12) pourvus chacun sur leur surface périphérique intérieure ou extérieure d'une pluralité de moyens d'engrènement (7b, 8b, 9b, 10b, 11b, 12b) et fixés uniquement sur l'une des bagues intérieure ou extérieure (3) du palier à roulement (1), la circonférence de la couronne (6, 20) étant sensiblement égale à la circonférence de la combinaison des segments d'engrenage indépendants.

## Description

La présente invention concerne le domaine des paliers à roulement et notamment les paliers à roulement utilisés dans le domaine des propulseurs de navire ou les éoliennes.

On entend par « navire », un bâtiment de fort tonnage destiné à la navigation maritime tels que les navires de commerce (pétroliers, porte-conteneurs, navires de pêche...), les navires de guerre (porte-avions, sous-marins ...) ou encore les grands voiliers ou les paquebots de croisière. Un propulseur de navire se présente typiquement sous la forme d'un ensemble comprenant un moteur entraînant en rotation au moins une hélice, ce propulseur étant fixé à la coque du navire, notamment à l'arrière du navire. Afin de gouverner le navire, il est connu d'utiliser un roulement d'orientation, dit « pitch bearing » en termes anglo-saxon, afin d'orienter le propulseur par rapport à la coque du navire.

Une éolienne comprend généralement une nacelle, montée à rotation sur un mât et renfermant une génératrice destinée à produire de l'énergie électrique, un rotor entraîné par le vent et pourvu d'un moyeu supportant au moins deux pales, et un palier à roulement de grande dimension supportant le rotor.

Afin de contrôler les charges appliquées sur le rotor, il est connu d'utiliser un roulement d'orientation, dit « pitch bearing » en termes anglo-saxon, afin d'orienter les pales de l'éolienne suivant leur axe longitudinal en fonction de l'orientation du vent.

Un tel palier à roulement comprend une bague extérieure fixée au moyeu, une bague intérieure fixée à une des pales et une pluralité d'éléments roulants, tels que des billes, disposés entre les bagues intérieure et extérieure.

Le palier à roulement comporte une couronne pourvue d'une denture intérieure périphérique destinée à engrainer avec un actionneur par l'intermédiaire d'un pignon d'engrenage. Il est connu de former directement la denture intérieure sur la surface intérieure de la bague intérieure.

Toutefois, un tel palier à roulement, dit d'orientation, ne fonctionne que lorsqu'il est nécessaire d'orienter la pale ou le propulseur et effectue de petites rotations, de sorte qu'une petite portion des dentures n'est utilisée. De plus, un tel roulement peut être à l'arrêt pendant une longue période, accélérant ainsi sa dégradation.

Lors de l'usure de la denture, il est alors nécessaire de démonter la bague intérieure, voire le palier à roulement dans son ensemble, ce qui est relativement complexe et onéreux.

On peut se référer au document EP 2 474 735 qui décrit un dispositif de montage d'un engrenage d'orientation de pales sur un roulement d'orientation d'une éolienne comprenant une bague intérieure, une bague extérieure, et un engrenage fixé par une pluralité de moyens de fixation sur la bague intérieure.

Bien qu'un tel dispositif permette de changer uniquement l'engrenage en cas d'usure, la pluralité de moyens de fixation engendre un encombrement important et est complexe à réaliser.

On peut également se référer au document US 7, 331, 761 qui décrit un roulement d'orientation de pales pour éolienne comprenant une bague intérieure, une bague extérieure et deux rangées d'éléments roulants disposés entre les bagues. La surface intérieure de la bague intérieure est pourvue d'une pluralité de dents sur une portion inférieure à 200° et destinée à engrener avec un pignon afin d'orienter les pales de l'éolienne.

Toutefois, lors de l'usure de la denture, il est alors nécessaire de démonter la bague intérieure dans son entier.

La présente invention a donc pour but de remédier à ces inconvénients.

Plus particulièrement, la présente invention vise à prévoir un palier à roulement facile à fabriquer, à monter, d'encombrement restreint, et permettant un démontage rapide et économique des moyens d'engrènement.

L'invention a pour objet un palier à roulement comprenant une bague intérieure, une bague extérieure, au moins une rangée d'éléments de roulement disposés entre des chemins de roulements pratiqués sur lesdites bagues et une couronne d'engrenage fixée sur l'une desdites bagues.

La couronne d'engrenage est formée par au moins deux segments d'engrenage indépendants pourvus chacun sur leur surface périphérique intérieure ou extérieure d'une pluralité de moyens d'engrènement et fixés uniquement sur l'une des bagues intérieure ou extérieure du palier à roulement, la circonférence de la couronne étant sensiblement égale à la circonférence de la combinaison des segments d'engrenage indépendants.

Ainsi, le segment d'engrenage endommagé peut être démonté sans démonter les autres segments d'engrenage non endommagé. Il n'est pas non plus nécessaire de démonter entièrement la bague intérieure ou extérieure sur laquelle sont fixés les segments d'engrenage indépendants, voire le palier à roulement dans son ensemble, ce qui permet un démontage simplifié.

Avantageusement, chaque segment d'engrenage comprend une portion axiale s'étendant axialement à partir d'une surface radiale du segment d'engrenage.

Chacune des portions axiales peut comprendre au moins un perçage radial destiné à coopérer avec un moyen de fixation sur l'une des bagues intérieure ou extérieure.

Selon un mode de réalisation, chaque segment d'engrenage comprend une portion radiale s'étendant radialement à partir de la portion axiale en direction opposée aux dents radiales.

Chacune des portions radiales peut comprendre au moins un perçage axial destiné à coopérer avec un moyen de fixation sur l'une des bagues intérieure ou extérieure.

Selon un mode de réalisation, la couronne d'engrenage est fixée sur la surface intérieure périphérique de la bague intérieure, lesdits segments d'engrenage indépendants étant pourvus chacun sur leur surface périphérique intérieure d'une pluralité de moyens d'engrènement.

Selon un mode de réalisation, la circonférence de la couronne d'engrenage est inférieure ou égale à 360°, de préférence inférieure ou égale à 120°. En effet, lors de l'orientation de la pale, le palier à roulement effectue de petites rotations, de sorte qu'une petite portion des dentures n'est utilisée. L'utilisation d'une couronne d'engrenage de circonférence inférieure ou égale à 120° est alors suffisante et permet une réduction de matière significative.

Par exemple, la couronne d'engrenage est formée par quatre segments d'engrenage indépendants s'étendant chacun circonférentiellement substantiellement sur 90°, ou par six segments d'engrenage indépendants s'étendant chacun circonférentiellement substantiellement sur 60°.

Avantageusement, les moyens d'engrènement sont des dents radiales, par exemple destinées à coopérer avec une roue dentée, telle qu'un pignon d'engrenage.

Selon un second aspect, l'invention concerne une éolienne comprenant une nacelle, montée sur un mât et renfermant une génératrice destinée à produire de l'énergie électrique, un rotor pourvu d'un moyeu supportant au moins deux pales, et un palier à roulement tel que décrit précédemment monté entre le moyeu et une pale.

Selon un autre aspect, l'invention concerne un navire comprenant une coque, un propulseur renfermant un moteur et des hélices, et un palier à roulement tel que décrit précédemment monté entre la coque et le propulseur.

La présente invention sera mieux comprise à la lecture de la description de quelques modes de réalisation, donnés à titre d'exemples nullement limitatifs et illustrés par les dessins annexés sur lesquels :
- la figure 1 est une vue en coupe axiale d'un palier à roulement selon un premier mode de réalisation de l'invention;
- la figure 2 est une vue en perspective du palier à roulement selon la figure 1 ;
- la figure 3 est une vue en perspective de la couronne d'engrenage selon un autre mode de réalisation ;
- la figure 4 est une vue en coupe axiale d'un palier à roulement selon un deuxième mode de réalisation de l'invention; et
- la figure 5 est une vue en perspective de la couronne d'engrenage dans le palier à roulement de la figure 4.

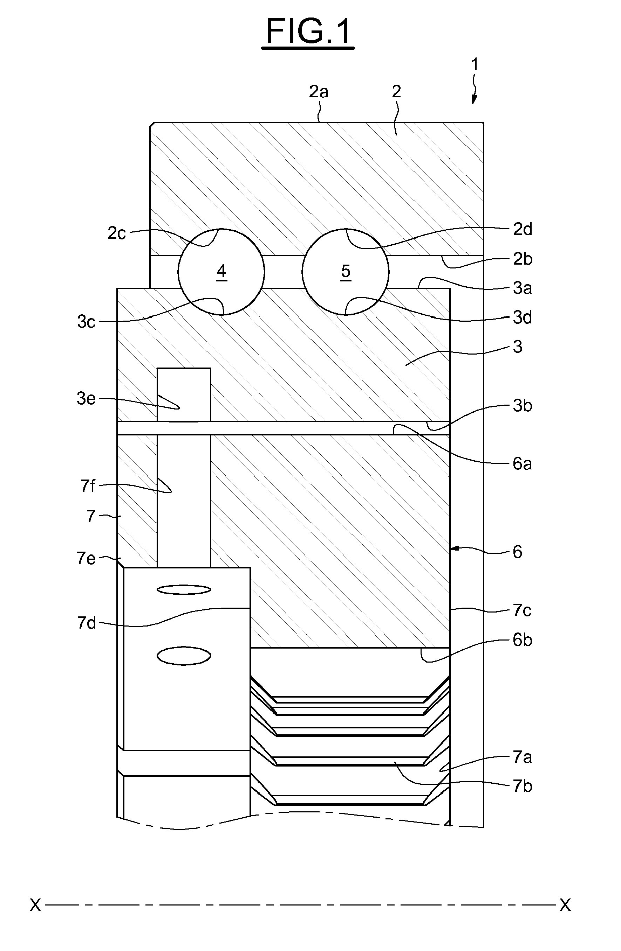

Le palier à roulement, d'axe axial X-X, référencé 1 dans son ensemble sur les figures 1 à 3, est un palier à roulement dit d'orientation destiné à être utilisé dans une éolienne (non représentée).

A titre d'exemple non limitatif, une éolienne comprend une nacelle disposée à une extrémité d'un mât et un rotor pourvu d'un moyeu supportant au moins deux pales entraînées par le vent afin de produire de l'énergie électrique.

Le palier à roulement 1 est destiné à être disposé entre le moyeu du rotor et une des pales et utilisé afin d'orienter les pales de l'éolienne suivant leur axe longitudinal en fonction de l'orientation du vent.

Le palier à roulement 1 comprend une bague extérieure 2 destinée à être fixée au moyeu (non représenté) par sa surface extérieure cylindrique 2a ou par l'une de ses faces, une bague intérieure 3 destinée à être fixée à une des pales (non représentée), deux rangées d'éléments roulants 4, 5, ici réalisés sous forme de billes, disposés entre les bagues intérieure 3 et extérieure 2 et une cage (non représentée) de maintien de l'espacement circonférentiel régulier des éléments roulants de chaque rangée 4, 5. En variante, on pourrait prévoir une unique rangée d'éléments roulants disposés entre les bagues intérieure 3 et extérieure 2.

Les bagues extérieure 2 et intérieure 3 sont massives. On entend par « bague massive », une bague dont la forme est obtenue par usinage avec enlèvement de copeaux (tournage, rectification) à partir de tubes, de barres, d'ébauches forgées et/roulées.

La bague extérieure 2 comprend, au niveau de son alésage 2b, deux chemins de roulement 2c, 2d à gorge profonde présentant en section droite un profil interne concave adapté aux éléments roulants 4, 5, lesdits chemins de roulement 2c, 2d étant dirigés radialement vers l'intérieur. La bague intérieure 3 comprend également, au niveau de sa surface extérieure cylindrique 3a, deux chemins de roulement 3c, 3d à gorge profonde présentant en section droite un profil interne concave adapté aux éléments roulants 4, 5, lesdits chemins de roulement 3c, 3d étant dirigés radialement vers l'extérieur. Le chemin de roulement 2c de la bague extérieure 2 est aligné avec le chemin de roulement 3c de la bague intérieure 3, afin de recevoir les éléments roulants de la première rangée 4 d'éléments roulants. Le chemin de roulement 2d de la bague extérieure 2 est aligné avec le chemin de roulement 3d de la bague intérieure 3, afin de recevoir les éléments roulants de la deuxième rangée 5 d'éléments roulants.

Dans un autre mode de réalisation préféré de l'invention (non représenté), chaque chemin de roulement 2c, 2d, 3c, 3d comprend deux pistes de roulement pour les éléments roulants, ces deux pistes étant de même rayon mais leur centres étant distincts, de sorte que chaque rangée d'éléments roulants est en configuration « quatre points de contact ».

Le palier à roulement 1 comprend une couronne d'engrenage 6 de forme annulaire s'étendant circonférentiellement sur 360° et destinée à être fixée sur une des bagues intérieure ou extérieure. En variante, on pourrait prévoir une couronne d'engrenage présentant une circonférence inférieure à 360°, voire inférieure ou égale à 120°.

Dans l'exemple illustré, la surface extérieure 6a de la couronne d'engrenage 6 est fixée sur la surface intérieure cylindrique 3b de la bague intérieure 3. En variante, on pourrait prévoir que la surface intérieure 6b de la couronne d'engrenage 6 soit fixée sur la surface extérieure cylindrique 2a de la bague extérieure 2. Dans ce cas, la bague intérieure 3 serait fixée au moyeu et la bague extérieure 2 serait fixée à une des pales.

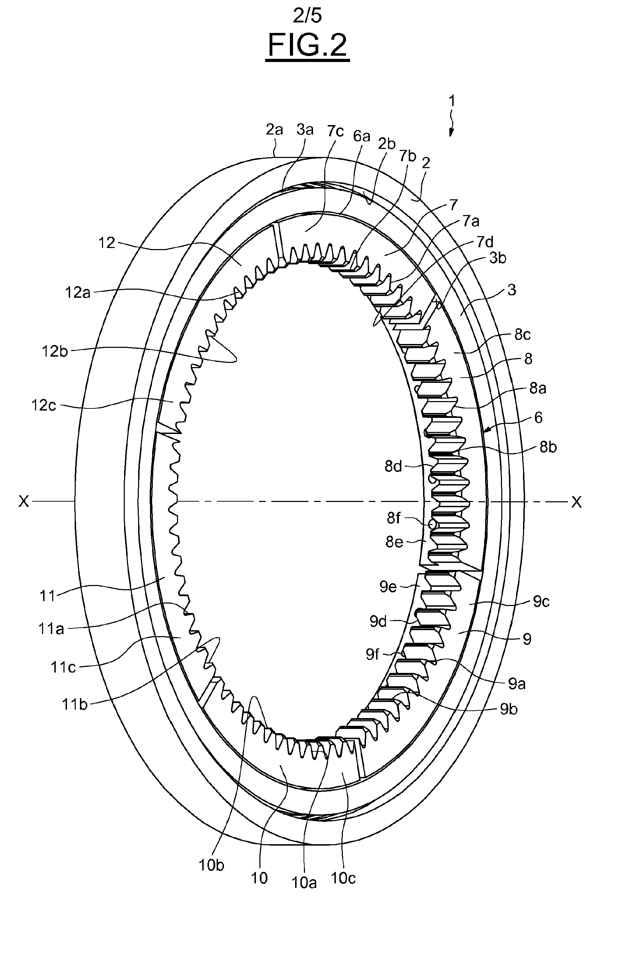

La couronne d'engrenage 6, illustrée en détails sur la figure 2, est formée par une pluralité de segments d'engrenage 7, 8, 9, 10, 11, 12 indépendants et identiques, par exemple au nombre de six, s'étendant chacun circonférentiellement substantiellement sur 60°. On notera qu'un léger espace circonférentiel subsiste entre deux segments d'engrenage adjacents.

On notera que l'on pourrait prévoir un nombre de segments supérieur ou égal à deux. Les segments d'engrenage peuvent présenter une longueur circonférentielle différente entre eux, tout en présentant une circonférence totale sensiblement égale à la circonférence de la couronne. La circonférence totale de la couronne correspond à la somme des circonférences de chacun des segments d'engrenage indépendants. A titre d'exemple non limitatif, on pourrait prévoir que la couronne d'engrenage soit formée par deux segments d'engrenage indépendants, chacun présentant une circonférence substantiellement de 45°, de sorte que la couronne d'engrenage présente une circonférence de 90°.

Dans l'exemple illustré sur la figure 2, la pluralité de segments d'engrenage 7, 8, 9, 10, 11, 12 indépendants forment une couronne d'engrenage de circonférence sensiblement égale à 360°.

Tels qu'illustrés sur la figure 2, chacun des segments d'engrenage indépendants 7, 8, 9, 10, 11, 12 est pourvu sur sa surface périphérique intérieure 7a, 8a, 9a, 10a, 11a, 12a d'une pluralité de dents radiales 7b, 8b, 9b, 10b, 11b, 12b destinées à engrener avec un pignon d'engrenage (non représenté) de forme complémentaire. En variante, on pourrait prévoir toute autre forme d'engrenage permettant aux segments d'engrenage d'engrener avec le pignon d'engrenage. Les segments d'engrenage indépendants 7, 8, 9, 10, 11, 12 sont fixés uniquement sur la surface intérieure 3b de la bague intérieure 3 du palier à roulement 1 et ne sont pas fixés entre eux. En variante, on pourrait prévoir que les segments d'engrenage indépendants 7, 8, 9, 10, 11, 12 soient fixés uniquement sur la surface extérieure 2a de la bague extérieure 2 du palier à roulement 1.

Chaque segment d'engrenage 7, 8, 9, 10, 11, 12 comprend deux surfaces radiales latérales 7c, 7d, 8c, 8d, 9c, 9d, 10c, 10d, 11c, 12d.

Seul le segment 7 sera décrit par la suite, étant entendu que les segments 8, 9, 10, 11 et 12 sont identiques au segment 7.

Le segment d'engrenage 7 comprend une portion axiale 7e s'étendant axialement à partir de la deuxième surface radiale latérale 7d du segment d'engrenage 7, opposé à la première surface latérale 7c. Le diamètre extérieur de la portion axiale 7e est sensiblement identique au diamètre extérieur du segment d'engrenage 7 et le diamètre intérieur de la portion axiale 7e est supérieur au diamètre de la surface intérieure 7a du segment d'engrenage 7. Telle qu'illustrée, la portion axiale 7e comprend une pluralité de perçages radiaux 7f destinés chacun à coopérer avec un moyen de fixation (non représenté) coopérant avec un perçage radial correspondant 3e pratiqué sur la surface intérieure 3b de la bague intérieure 3. Les moyens de fixation peuvent être par exemple des moyens de visseries, tels que des systèmes vis-écrou ou des rivets.

Alternativement, ce moyen de fixation peut se limiter à un moyen de positionnement tel que des pions de centrage ou un épaulement d'appui.

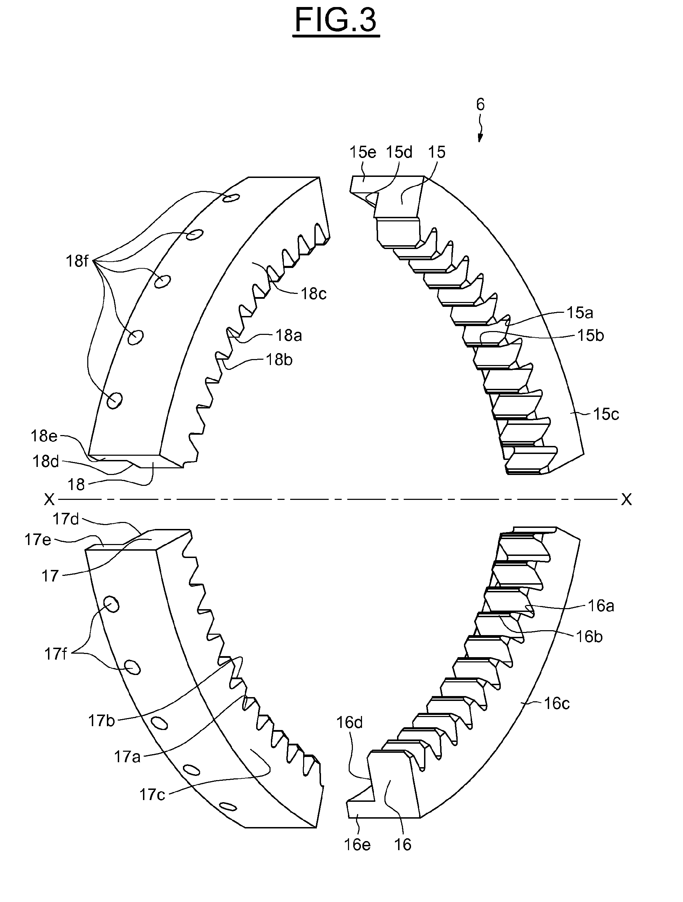

Le mode de réalisation illustré sur la figure 3, dans lequel les mêmes éléments ont les mêmes références, diffère du mode de réalisation illustré aux figures 1 à 2 par le nombre de segments d'engrenage.

Telle qu'illustrée sur la figure 3, la couronne d'engrenage 6 est formée par quatre segments d'engrenage 15, 16, 17, 18, identiques et indépendants les uns des autres, s'étendant chacun circonférentiellement substantiellement sur 90°.

Chacun des segments d'engrenage 15, 16, 17, 18 est pourvu sur sa surface périphérique intérieure 15a, 16a, 17a, 18a d'une pluralité de dents radiales 15b, 16b, 17b, 18b destinées à engrener avec un pignon d'engrenage (non représenté) de forme complémentaire. En variante, on pourrait prévoir toute autre forme d'engrenage permettant aux segments d'engrenage d'engrener avec le pignon d'engrenage. Les segments d'engrenage indépendants 15, 16, 17, 18 sont fixés uniquement sur la bague intérieure 3 du palier à roulement 1 et ne sont pas fixés entre eux.

Chaque segment d'engrenage 15, 16, 17, 18 comprend deux surfaces radiales latérales 15c, 15d, 16c, 16d, 17c, 17d, 18c, 18d et une portion axiale 15e, 16e, 17e, 18e, s'étendant axialement à partir de la deuxième surface radiale latérale 15d, 16d, 17d, 18d du segment d'engrenage 15, 16, 17, 18 correspondant, opposé à la première surface latérale 15c, 16c, 17c, 18c. Le diamètre extérieur de la portion axiale 15e, 16e, 17e, 18e est sensiblement identique au diamètre extérieur du segment d'engrenage correspondant 15, 16, 17, 18 et le diamètre intérieur de la de la portion axiale 15e, 16e, 17e, 18e est supérieur au diamètre de la surface intérieure 15a, 16a, 17a, 18a du segment d'engrenage 15, 16, 17, 18. Telle qu'illustrée, la portion axiale 15e, 16e, 17e, 18e comprend une pluralité de perçages radiaux 15f, 16f, 17f, 18f destinés chacun à coopérer avec un moyen de fixation (non représenté) coopérant avec un perçage radial correspondant 3e pratiqué sur la bague intérieure 3.

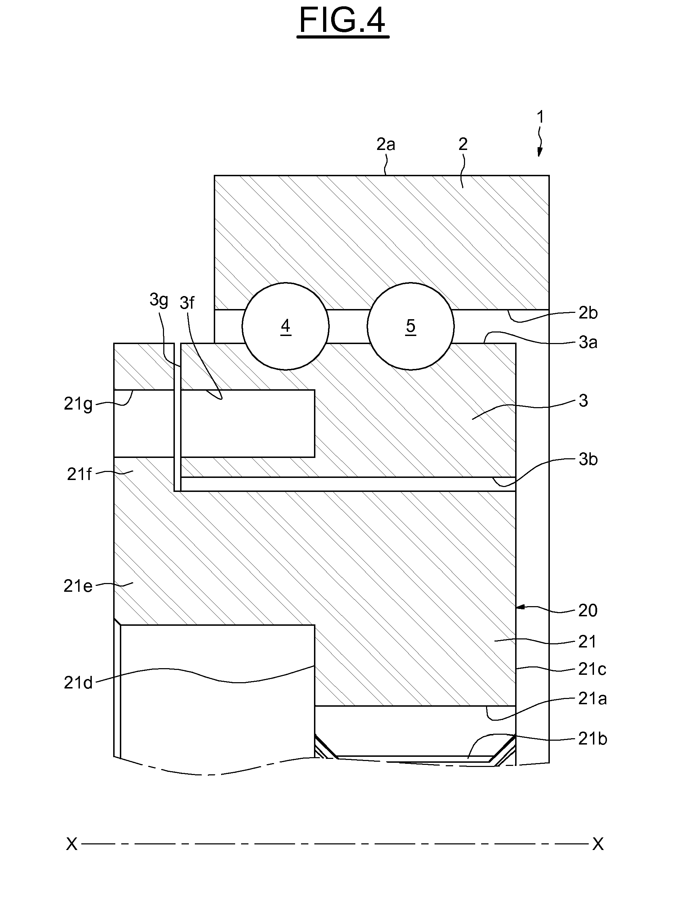

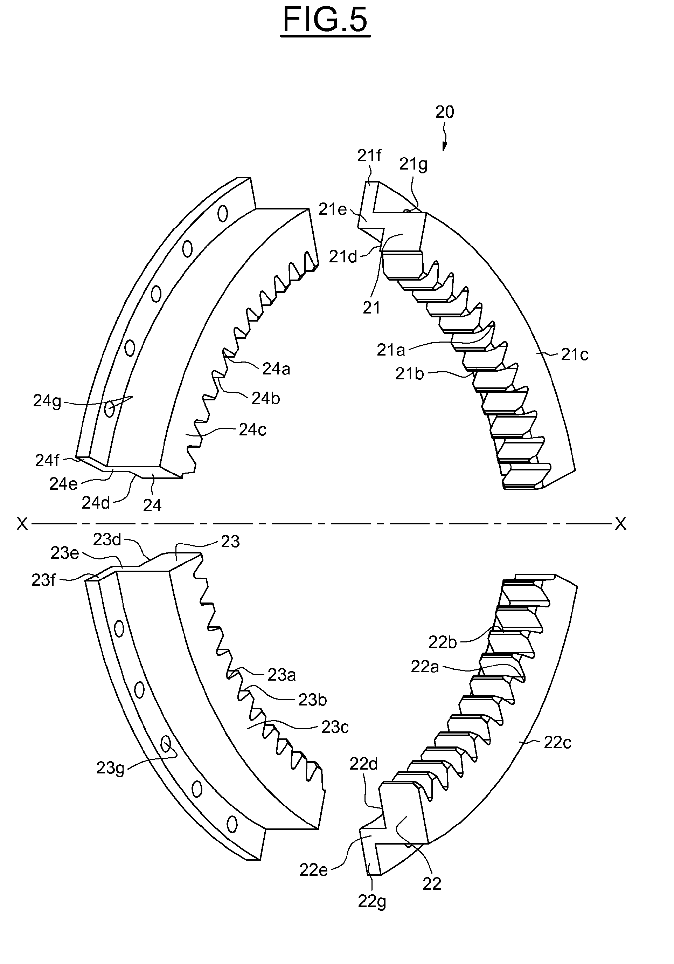

Le mode de réalisation illustré sur les figures 4 et 5, dans lequel les mêmes éléments ont les mêmes références, diffère du mode de réalisation illustré aux figures 1 à 2 par la forme des segments d'engrenage.

Telle qu'illustrée sur les figures 4 et 5, la couronne d'engrenage 20, illustrée en détails sur la figure 5, est formée par une pluralité de segments d'engrenage 21, 22, 23, 24 identiques indépendants les uns des autres, par exemple au nombre de quatre, s'étendant chacun circonférentiellement substantiellement sur 90°. Les segments d'engrenage indépendants 21, 22, 23, 24 sont fixés uniquement sur la surface intérieure 3b de la bague intérieure 3 du palier à roulement 1 et ne sont pas fixés entre eux.

On notera que l'on pourrait prévoir un nombre de segments d'engrenage supérieur ou égal à deux. En variante, les segments d'engrenage peuvent présenter une longueur circonférentielle différente, tout en formant une couronne d'engrenage substantiellement de 360°.

Tels qu'illustrés sur la figure 5, chacun des segments d'engrenage indépendants 21, 22, 23, 24 est pourvu sur sa surface périphérique intérieure 21a, 22a, 23a, 24a d'une pluralité de dents radiales 21b, 22b, 23b, 24b destinées à engrener avec un pignon d'engrenage (non représenté) de forme complémentaire. En variante, on pourrait prévoir toute autre forme d'engrenage permettant aux segments d'engrenage d'engrener avec le pignon d'engrenage.

Chaque segment d'engrenage 21, 22, 23, 24 comprend deux surfaces radiales latérales 21c, 21d, 22c, 22d, 23c, 23d, 24c, 24d.

Chaque segment d'engrenage 21, 22, 23, 24 comprend une portion axiale 21e, 22e, 23e, 24e s'étendant axialement à partir de la deuxième surface radiale latérale 21d, 22d, 23d, 24d du segment d'engrenage 21, 22, 23, 24, opposé à la première surface latérale 21c, 22c, 23c, 24c. Le diamètre extérieur de la portion axiale 21e, 22e, 23e, 24e est sensiblement identique au diamètre extérieur du segment d'engrenage correspondant 21, 22, 23, 24 et le diamètre intérieur de la portion axiale 21e, 22e, 23e, 24e est supérieur au diamètre de la surface intérieure 21a, 22a, 23a, 24a du segment d'engrenage correspondant 21, 22, 23, 24. Telle qu'illustrée, chaque portion d'engrenage 21, 22, 23, 24 comprend une portion radiale 21f, 22f, 23f, 24f s'étendant radialement à partir de la portion axiale 21e, 22e, 23e, 24e en direction opposée aux dents radiales 21b, 22b, 23b, 24b vers la bague extérieure 2. Chaque portion radiale 21f, 22f, 23f, 24f comprend une pluralité de perçages axiaux 21g, 22g, 23g, 24g destinés chacun à coopérer avec un moyen de fixation (non représenté) coopérant avec un perçage axial correspondant 3f pratiqué sur une surface radiale latérale 3g de la bague intérieure 3.

Grâce à l'invention, lors de l'usure de la denture, il est aisé de démonter le segment d'engrenage endommagé sans démonter les autres segments d'engrenage non endommagé, ni entièrement la bague intérieure, voire le palier à roulement dans son ensemble.

La structure particulière des segments d'engrenage permet une fixation aisée, de manière radiale ou axiale sur la bague intérieure.

On notera que le palier à roulement 1 selon l'invention pourrait également être utilisé dans un navire de fort tonnage (non représenté). Un navire comprend généralement un propulseur comportant un moteur et au moins une hélice afin de propulser le navire. Le propulseur est monté sur la coque du navire, notamment à l'arrière du navire, par l'intermédiaire du palier à roulement 1. Les navires de fort tonnage étant généralement dépourvus de gouvernail, le palier à roulement 1 permet d'orienter le propulseur par rapport à la coque du navire afin de gouverner le navire.

## Revendications

1. Palier à roulement (1) comprenant une bague intérieure (3), une bague extérieure (2), au moins une rangée d'éléments de roulement (4) disposés entre des chemins de roulements (2c, 3c) pratiqués sur lesdites bagues (2, 3) et une couronne d'engrenage (6, 20) fixée sur l'une desdites bagues (2, 3), **caractérisé en ce que** la couronne d'engrenage (6, 20) est formée par au moins deux segments d'engrenage indépendants (7 à 12 ; 15 à 18 ; 21 à 24) pourvus chacun sur leur surface périphérique intérieure ou extérieure d'une pluralité de moyens d'engrènement et fixés uniquement sur l'une des bagues intérieure ou extérieure (3, 2) du palier à roulement (1), la circonférence de la couronne (6, 20) étant sensiblement égale à la circonférence de la combinaison des segments d'engrenage indépendants.

2. Palier à roulement selon la revendication 1, dans lequel chaque segment d'engrenage (7 à 12 ; 15 à 18 ; 21 à 24) comprend une portion axiale (7e à 12e ; 15e à 18e ; 21e à 24e) s'étendant axialement à partir d'une surface radiale du segment d'engrenage.

3. Palier à roulement selon la revendication 2, dans lequel chacune des portions axiales (7e, 8e, 9e, 10e, 11e, 12e ; 15e, 16e, 17e, 18e) comprend au moins un perçage radial (7f, 8f, 9f, 10f, 11f, 12f ; 15f, 16f, 17f, 18f) destiné à coopérer avec un moyen de fixation sur l'une des bagues intérieure ou extérieure (3, 2).

4. Palier à roulement selon la revendication 2, dans lequel chaque segment d'engrenage (21, 22, 23, 24) comprend une portion radiale (21f, 22f, 23f, 24f) s'étendant radialement à partir de la portion axiale (21e, 22e, 23e, 24e) en direction opposée aux moyens d'engrènement (21b, 22b, 23b, 24b).

5. Palier à roulement selon la revendication 4, dans lequel chacune des portions radiales (21f, 22f, 23f, 24f) comprend au moins un perçage axial (21g, 22g, 23g, 24g) destiné à coopérer avec un moyen de fixation sur l'une des bagues intérieure ou extérieure (3, 2).

6. Palier à roulement selon l'une des revendications précédentes, dans lequel la couronne d'engrenage (6, 20) est fixée sur la surface intérieure périphérique (3b) de la bague intérieure (3), lesdits segments d'engrenage (7 à 12 ; 15 à 18 ; 21 à 24) étant pourvus chacun sur leur surface périphérique intérieure d'une pluralité de moyens d'engrènement.

7. Palier à roulement selon l'une quelconque des revendications précédentes, dans lequel la circonférence de la couronne d'engrenage (6, 20) est inférieure ou égale à 360°, de préférence inférieure ou égale à 120°.

8. Palier à roulement selon l'une quelconque des revendications précédentes, dans lequel la couronne d'engrenage (6, 20) est formée par quatre segments d'engrenage (15, 16, 17, 18 ; 21, 22, 23, 24) indépendants s'étendant chacun circonférentiellement substantiellement sur 90°.

9. Palier à roulement selon l'une quelconque des revendications 1 à 7, dans lequel la couronne d'engrenage (6, 20) est formée par six segments d'engrenage indépendants (7, 8, 9, 10, 11, 12) s'étendant chacun circonférentiellement substantiellement sur 60°.

10. Palier à roulement selon l'une quelconque des revendications précédentes, dans lequel les moyens d'engrènement sont des dents radiales (7b, 8b, 9b, 10b, 11b, 12b ; 15b, 16b, 17b, 18b ; 21b, 22b, 23b, 24b).

11. Eolienne comprenant une nacelle, montée sur un mât et renfermant une génératrice destinée à produire de l'énergie électrique, un rotor pourvu d'un moyeu supportant au moins deux pales, et un palier à roulement (1) selon l'une quelconque des revendications précédentes monté entre le moyeu et une pale.
